# EUROPÄISCHE PATENTANMELDUNG

(11) **EP 1 454 597 A1**
(43) Veröffentlichungstag der Anmeldung: **08.09.2004**
(21) Anmeldenummer: 03004741.9
(22) Anmeldetag: 04.03.2003
(51) Int. Cl.: A61C 13/10

(54) **Kunstzahn für Zahnprothesen**

(71) Anmelder: Merz Dental GmbH, 24321 Lütjenburg (DE)
(72) Erfinder: Koller, Martin, 24329 Dannau (DE); Becker, Frank, 24321 Lütjenburg (DE)
(74) Vertreter: Glawe, Delfs, Moll & Partner

(57) **Zusammenfassung**

Die Erfindung betrifft einen Kunstzahn für Zahnprothesen mit einer als Bißfläche ausgebildeten Oberseite (11) und einer Unterseite (12), die zum Einsetzen in ein Aufnahmebett (2) einer Zahnprothese ausgebildet ist. Die Erfindung sieht vor, daß an der Unterseite (12) mindestens eine in mesio-distaler Richtung laufende Halterille (15) ausgebildet ist. Dadurch wird eine sichere formschlüssige Verbindung des Kunstzahns (1) mit dem Aufnahmebett (2) erreicht, wobei der Kunstzahn (1) leicht eingesetzt werden kann und gegebenenfalls nach einem Herausbrechen auch wieder repositioniert werden kann. Die Halterille (15) wirkt selbstsichernd, indem sie bei steigenden auf den Kunstzahn einwirkenden Belastungen einen größeren Widerstand gegen unerwünschte seitliche Bewegungen erzeugt.

## Beschreibung

Die Erfindung betrifft ein Kunstzahn für Zahnprothesen mit einer als Bißfläche ausgebildeten Oberseite und einer Unterseite, die zum Einsetzen in ein Aufnahmebett der Zahnprothese ausgebildet ist.

Zahnprothesen bestehen üblicherweise aus einem Aufnahmebett und mehreren in dieses eingesetzte Kunstzähnen. Eine Schwierigkeit besteht darin, die Kunstzähne an der richtigen Stelle in dem Aufnahmebett zu positionieren und dort sicher zu halten. Das Aufnahmebett besteht üblicherweise aus einem wachsartigen Material. Dies ermöglicht es, die Kunstzähne beim Einsetzen in das Aufnahmebett hinein zu drücken, wobei das Wachs aufgrund seiner Plastizität zurückgedrängt wird und Platz für den Kunstzahn macht. Die Plastizität des Waches hält den Kunstzahn fest. Die Sicherheit mit der eine genaue Positionierung des Kunstzahns gelingt, hängt in erheblichem Umfang von der Gestaltung der Unterseite des Kunstzahns ab. Bei einer planen Ausgestaltung der Unterseite ist eine genaue Positionierung verhältnismäßig einfach. Häufig ist jedoch aus Gründen der Festigkeit oder der Anatomie die Unterseite des Kunstzahns nicht plan ausgeführt, sondern sie weist Schrägen auf. Die Schrägen führen dazu, daß die Kunstzähne beim Aufbringen von Druckkräften sich in unerwünschter Weise quer zur Richtung der Schräge bewegen. Eine genaue Positionierung ist damit nur schwer erreichbar.

Der Erfindung liegt die Aufgabe zugrunde, einen Kunstzahn der eingangs genannten Art zu schaffen, mit dem eine einfachere und genauere Positionierung in einem Aufnahmebett einer Zahnprothese ermöglicht ist.

Die Erfindung löst die Aufgabe durch einen Kunstzahn mit den Merkmalen des Anspruchs 1. Vorteilhafte Weiterbildungen sind Gegenstand der abhängigen Ansprüche.

Erfindungsgemäß ist bei einem Kunstzahn für Zahnprothesen mit einer als Bißfläche ausgebildeten Oberseite und einer Unterseite zum Einsetzen in ein Aufnahmebett der Zahnprothese vorgesehen, daß an der Unterseite mindestens eine in mesiodistaler Richtung laufende Halterille ausgebildet ist. Durch die erfindungsgemäße Gestaltung der Unterseite wird eine eindeutige und stabile Positionierung und Fixierung des Zahns in dem Aufnahmebett erreicht. Der Zahn ist gegenüber Verschiebungen, insbesondere in bukkaler/labialer bzw. dazu entgegengesetzter Richtung besser gesichert. Überlicherweise ist die Unterseite der Kunstzähne nicht lotrecht zu einer von oben einwirkenden Kaukraft, sondern ist nach außen zur bukkalen/labialen Seite hin geneigt. Da die Unterseite somit eine "schiefe Ebene" bildet, entsteht unter der Einwirkung der Kaukraft eine nach bukkal/labial gerichtete Seitenkraft, die den Zahn in horizontaler Richtung zu verschieben sucht. Die erfindungsgemäße Halterille sichert den Kunstzahn gegenüber einer solchen unerwünschten Verschiebung. Der Gefahr, daß sich bei der Wachseinprobe der Zahnprothese am Patienten der Kunstzahn unter der Einwirkung der Kaukraft verschiebt, wird damit auf effektive Weise entgegengewirkt.

Zudem ist der Zahn gegenüber unerwünschten Verdrehungen in dem Aufnahmebett weitgehend geschützt. Insgesamt ergibt sich somit sowohl ein vereinfachtes Einsetzen des Kunstzahns in das Aufnahmebett wie auch eine wesentlich sichere Halterung des eingesetzten Zahns in das Bett. Dadurch erhöht sich die Dimensionstreue der Prothese insgesamt sowohl vor, während und auch nach der Wachsanprobe. Darüber hinaus erleichtert die erfindungsgemäße Rille auch ein positionsgenaues Wiedereinsetzen des Zahns, wenn dieser bei der Einprobe herausgebrochen ist.

Der erfindungsgemäße Kunstzahn kann sowohl als Backen- wie auch als Frontzahn ausgebildet sein. Je nach dem ist die Bißfläche zum Kauen flächenmäßig ausgedehnt oder zum Abbeißen spitzenartig geformt.

Zweckmäßigerweise ist an der Unterseite ein Verdrängungsraum von einem umlaufenden Rand gebildet, in dem die Halterille ausgeformt ist. Der Rand verbessert die Positionierungsgenauigkeit des Zahns in dem Zahnbett und verdrängt beim Einsetzen Wachs in den von ihm umschlossenen Verdrängungsraum. Im eingesetzten Zustand ist der Verdrängungsraum dadurch weitgehend mit Wachs gefüllt. Dies sorgt in Verbindung mit der in dem Rand ausgeformten erfindungsgemäßen Rille für eine noch bessere Positionierungssicherheit des Zahns in dem Aufnahmebett. Vorzugsweise ist die Rille dabei ausschließlich in dem überstehenden Rand ausgebildet. Dadurch ist sichergestellt, daß sich die Rille beim Einsetzen des Kunstzahns in das Aufnahmebett mit Wachs füllt, so daß die Sicherungsfunktion ausgeübt wird. Es soll aber nicht ausgeschlossen sein, daß die Rille sich über den Bereich des überstehenden Rands hinaus in die Unterseite erstreckt. Dies kann insbesondere dann von Vorteil sein, wenn der Zahn verhältnismäßig großen Belastungen ausgesetzt ist und daher tief in das Aufnahmebett einzusetzen ist.

Bei einer zweckmäßigen Ausführungsform weist die Rille einen halbkreisförmigen Querschnitt auf. Diese Querschnittsform ist rationell herzustellen und vermeidet durch ihre innere runde Gestalt das Auftreten von Lastspitzen. Eine Schwächung der Struktur des Kunstzahns kann dadurch vermieden werden. Es können aber alternativ auch andere Querschnittsformen vorgesehen sein. Beispielsweise kann die Rille auch einen rechtekkigen Querschnitt aufweisen. Dieser hat aufgrund seiner steilstehenden Flanken den Vorteil, daß er eine besonders hohe Verschiebungs- und Drehungssicherheit bietet. Das Auftreten unerwünschter Belastungsspitzen kann durch ein Verrunden der Ecken weitgehend verhindert werden.

Zur Erhöhung der Haltesicherheit, insbesondere gegenüber einem unerwünschten Ausbrechen des Kunstzahns aus dem Wachsbett, kann die Rille zusätzlich einen hinterschnittenen Bereich aufweisen. Füllt sich beim Einsetzen des Kunstzahns in das Aufnahmebett dieser hinterschnittene Bereich mit Material aus dem Aufnahmebett, in der Regel Wachs, so ist der Kunstzahn gegenüber einem einfachen Herausbewegen aus dem Aufnahmebett gesichert. Die Gefahr eines Herausfallens ist damit entscheidend verringert. Die Kunstzähne bleiben so auch bei schwierigen Verhältnissen in ihrer Position.

Bei einer bewährten Ausführungsform ist parallel mindestens eine weitere Halterille angeordnet. Damit kann eine Mehrfachrille gebildet sein, die zur weiteren Erhöhung der Befestigungssicherheit beiträgt.

Die Oberseite des erfindungsgemäßen Kunstzahns ist je nach seiner Ausgestaltung als Backen- oder als Frontzahn flächenmäßig erstreckt oder eher spitzenartig geformt. Die Halterille ist vorzugsweise so unter der Oberseite angeordnet, daß sie sich lotrecht unterhalb des Flächenschwerpunkts der Oberseite befindet. Hierbei ist die Richtung des Lots durch die Richtung der von dem Zahn aufzubringenden Kaukraft definiert. Diese Anordnung wird dadurch erreicht, daß der Kunstzahn auch bei hohen Kaukräften nicht aus seiner Position herauskippt, wodurch die Halterille den Kontakt zu dem Aufnahmebett verlieren könnte. Der erfindungsgemäße Kunstzahn ist damit auch bei hohen Belastungen sicher in dem Aufnahmebett gehalten.

Die Erfindung wird nachfolgend in Bezug auf die Zeichnungen erläutert, in der vorteilhafte Ausführungsbeispiele dargestellt sind. Es zeigen:
- Fig. 1: eine perspektivische Ansicht eines ersten Ausführungsbeispiels eines erfindungsgemäßen Kunstzahns von schräg unten;
- Fig. 2: einen Schnitt durch eine Zahnprothese, in die der erfindungsgemäße Kunstzahn nach Fig. 1 eingesetzt ist; und
- Fig. 3: einen Schnitt durch eine Zahnprothese, in die ein Kunstzahn gemäß einem zweiten Ausführungsbeispiel eingesetzt ist.

Ein in seiner Gesamtheit mit dem Bezugszeichen 1 versehener Kunstzahn weist eine Oberseite 11, eine Unterseite 12 sowie mehrere Seitenflächen auf. Der Kunstzahn 1 ist aus einem festen und bioverträglichen Material hergestellt, beispielsweise Polymethylmethacrylat (PMMA). Es können aber auch andere für die Verwendung als Kunstzahn geeignete Materialien verwendet werden, insbesondere Nichtmetalle wie beispielsweise Keramik oder dergleichen, aber auch Metalle wie Gold oder dergleichen.

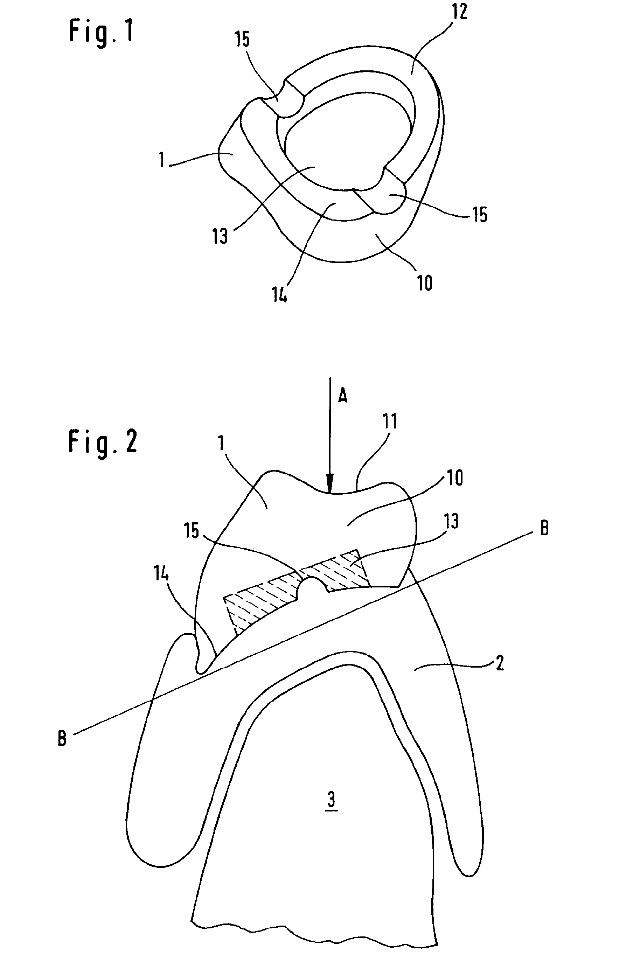

Der Kunstzahn 1 weist an seiner Unterseite 12 einen umlaufenden Rand 14 auf. Dieser umgrenzt einen Verdrängungsraum 13, der in dem dargestellten Ausführungsbeispiel vollständig von dem umlaufenden Rand 14 umschlossen ist. Der Verdrängungsraum 13 weist einen planen Grund auf. Er bildet zusammen mit der Oberfläche des Rands 14 die Unterseite 12 des Kunstzahns 1. Die Unterseite 12 ist gegenüber der Oberseite 11 geneigt, so daß die Höhe des Zahns in bukkaler/labialer Richtung hin zunimmt. Dadurch ergibt sich an der Unterseite 12 des Kunstzahns 1 eine "schiefe Ebene". Sie ist in Fig. 2 als Linie B-B dargestellt.

In dem Rand 14 ist eine Halterille 15 ausgebildet. In dem dargestellten Ausführungsbeispiel ist sie im Querschnitt von einer halbkreisförmigen Gestalt. Der Durchmesser der Halterille 15 ist so bemessen, daß sie auch an ihrem tiefsten Punkt nicht in den Grund des Verdrängungsraums 13 schneidet. Im dargestellten Ausführungsbeispiel beträgt das Verhältnis zwischen dem Durchmesser der Halterille 15 und der Höhe des Rands 14 etwa zwei zu drei. In dem dargestellten Ausführungsbeispiel sind die beiden halbkreisförmigen Vertiefungen der Halterille in dem Rand 14 in einer Flucht angeordnet. Dies ist eine aus produktionstechnischer Sicht vorteilhafte Anordnung; sie ist allerdings nicht unbedingt erforderlich, die Halterillen 15 können auch versetzt zueinander angeordnet sein. Der Bereich des Übergangs zwischen der Halterille 15 und der Oberfläche des Rands 14 ist vorzugsweise ausgerundet. Das hat den Vorteil, daß beim Einsetzen des Kunstzahns 1 in ein Aufnahmebett 2 die Gefahr, daß sich im Wachsmaterial des Aufnahmebetts 2 in diesem Bereich Risse bilden, verringert ist.

Der erfindungsgemäße Kunstzahn 1 im in das Aufnahmebett 2 eingesetzten Zustand ist in Fig. 2 dargestellt. Das Aufnahmebett 2 ist zur leichteren Erkennbarkeit in Schnitt dargestellt. Das Aufnahmebett 2 ist im Querschnitt sattelförmig gestaltet, so daß es auf dem Kieferkamm 3 des Patienten sitzend gehaltert ist. Man erkennt, daß im eingesetzten Zustand der Rand 14 an der Unterseite des Kunstzahns 1 in das Aufnahmebett 2 eindringt. Das Wachsmaterial des Aufnahmebetts 2 dringt in den Verdrängungsraum 13 sowie in die Halterille 15 ein, bis die Halterille 15 beinahe oder vollständig ausgefüllt ist. Das in die Halterille 15 eingedrungene Wachsmaterial sichert so den Kunstzahn 1 gegenüber einer Bewegung in bukkaler (in der Zeichnung links) oder in entgegengesetzter (in der Zeichnung rechts) weisender Richtung. Ferner sichert die Halterille 15 den Kunstzahn 1 gegenüber einem Verdrehen um seine Hochachse (in der Zeichenebene von oben nach unten verlaufend). Die Halterille 15 ist vorzugsweise lotrecht unterhalb des Flächenschwerpunkts der Oberseite 11 angeordnet, wobei die Richtung des Lots durch die Richtung der aufzunehmenden Kaukraft A definiert ist. Dadurch ist der erfindungsgemäße Kunstzahn 1 auch bei hohen Kaukraftbelastungen gegenüber einem Verkippen zur Seite weitgehend geschützt. Die erfindungsgemäße Halterille 15 ist somit auch bei hohen Belastungen sicher im Eingriff mit dem Aufnahmebett 2 und sichert den erfindungsgemäßen Kunstzahn 1 somit gegen unerwünschte seitliche Verschiebungen.

Nachfolgend wird nun die Wirkungsweise der erfindungsgemäßen Halterille 15 erläutert: Wirkt eine Kaukraft A auf die Oberseite 11 des Kunstzahns 1 ein, so besteht die Gefahr, daß aufgrund der Wirkung der schiefen Ebene B-B eine horizontale Kraftkomponente an der Unterseite 12 des Kunstzahns 1 entsteht, die versucht diesen in bukkaler Richtung zu verschieben. Dank der erfindungsgemäß vorgesehenen Halterille 15 und des darin eingedrungenen Wachsmaterials des Aufnahmebetts 2 ist der Kunstzahn 1 gegenüber dieser Verschiebung gesichert. Der Kunstzahn könnte nur dann verschoben werden, wenn der Kunstzahn 1 sich aus seinen in Fig. 2 dargestellten Sitz heraushebt; dem wirkt aber gerade die aufgebrachte Kaukraft A entgegen. Der Kunstzahn 1 sichert sich auf diese Weise auch bei großen Belastungen selbsttätig.

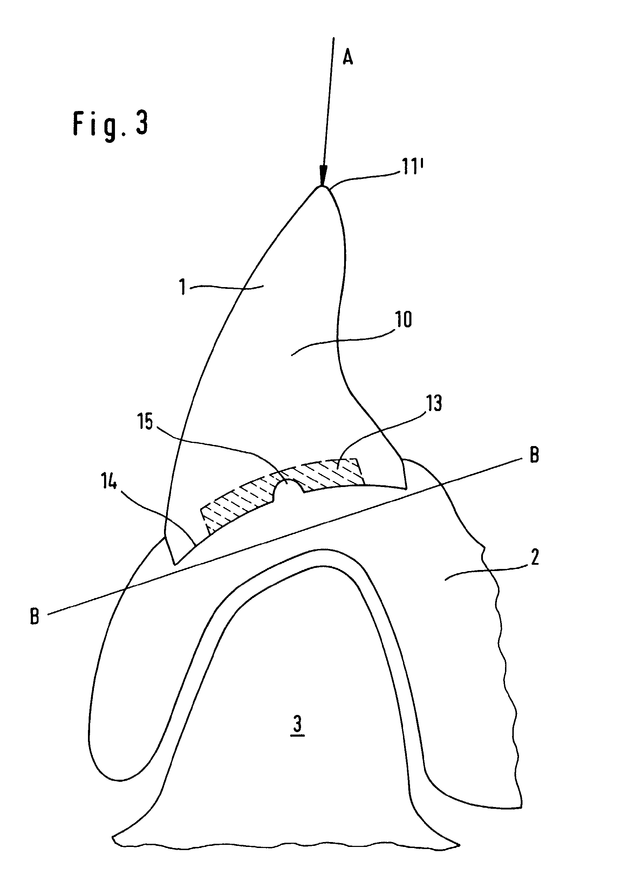

In Fig. 3 ist der Querschnitt durch ein zweites Ausführungsbeispiel des erfindungsgemäßen Kunstzahns 1 dargestellt. Er unterscheidet sich von dem in Fig. 2 dargestellten Ausführungsbeispiel im wesentlichen dadurch, daß es sich bei dem in Fig. 3 dargestellten Ausführungsbeispiel um einen Frontzahn handelt. Nachfolgend wird im wesentlichen auf die Unterschiede zwischen den beiden Ausführungsformen eingegangen; die vorherstehenden Ausführungen zu dem ersten Ausführungsbeispiel gelten im übrigen für das zweite Ausführungsbeispiel sinngemäß. Der Hauptunterschied liegt darin, daß bei dem in Fig. 3 dargestellten zweiten Ausführungsbeispiel anstelle einer flächig ausgedehnten Oberseite 11 eine Schneidkante 11' vorgesehen ist. Die Anordnung der Halterille 15 in Bezug auf die Schneidkante 11 ist so gewählt, daß die Halterille 15 sich etwa in dem auf die Kaukraft A bezogenen Lot der Schneidkante 11' befindet. Dadurch ist sichergestellt, daß auch bei hoher Kaukraft A ein Verkippen des Kunstzahns 1 verhindert werden kann, so daß auch unter solch hoher Belastung der Kunstzahn 1 durch die Halterille 15 sicher in dem Aufnahmebett 2 gehalten ist. Es versteht sich, daß soweit bei den zu dem ersten Ausführungsbeispiel gegebenen Erläuterungen auf eine bukkale Richtung Bezug genommen wurde, bei diesem Ausführungsbeispiel eine labiale Richtung gemeint ist.

## Patentansprüche

1. Kunstzahn für Zahnprothesen mit einer als Bißfläche ausgebildeten Oberseite (11) und einer Unterseite (12), die zum Einsetzen in ein Aufnahmebett (2) der Zahnprothese ausgebildet ist,
**dadurch gekennzeichnet daß**,
an der Unterseite (12) mindestens eine in mesiodistaler Richtung laufende Halterille (15) ausgebildet ist.

2. Kunstzahn nach Anspruch 1,
**dadurch gekennzeichnet, daß**
an der Unterseite ein Verdrängungsraum (13) von einem umlaufenden Rand (14) gebildet ist, in dem die Halterille (15) ausgeformt ist.

3. Kunstzahn nach Anspruch 2,
**dadurch gekennzeichnet, daß**
die Halterille (15) ausschließlich in dem Rand (14) ausgebildet ist.

4. Kunstzahn nach einem der Ansprüche 1 bis 3,
**dadurch gekennzeichnet, daß**
die Halterille einen halbkreisförmigen Querschnitt aufweist.

5. Kunstzahn nach einem der Ansprüche 1 bis 4,
**dadurch gekennzeichnet, daß**
die Halterille (15) einen rechteckförmigen Querschnitt aufweist.

6. Kunstzahn nach einem der Ansprüche 1 bis 5,
**dadurch gekennzeichnet, daß**
die Halterille (15) zusätzlich einen hinterschnittenen Bereich aufweist.

7. Kunstzahn nach einem der Ansprüche 1 bis 6,
**dadurch gekennzeichnet, daß**
parallel mindestens eine weitere Halterille angeordnet ist.

8. Kunstzahn nach einem der Ansprüche 1 bis 7,
**dadurch gekennzeichnet, daß**
die Halterille (15) lotrecht unterhalb eines Flächenschwerpunkts der Oberseite angeordnet ist, wobei die Richtung des Lots durch eine Kaukraft (A) definiert ist.
